# EUROPÄISCHE PATENTSCHRIFT

(11) **EP 2 132 539 B1**
(45) Veröffentlichungstag und Bekanntmachung des Hinweises auf die Patenterteilung: **14.08.2013**
(21) Anmeldenummer: 08717519.6
(22) Anmeldetag: 07.03.2008
(51) Int. Cl.: B60W 50/00

(54) **BESTIMMUNG DER MASSE EINES FAHRZEUGS**
DETERMINATION OF THE MASS OF A VEHICLE
PROCÉDÉ DE DÉTERMINATION DE LA MASSE D'UN VÉHICULE

(30) Priorität: 30.03.2007 DE 102007015356
(43) Veröffentlichungstag der Anmeldung: 16.12.2009
(73) Patentinhaber: ZF Friedrichshafen AG, 88038 Friedrichshafen (DE)
(72) Erfinder: WOLFGANG, Werner, 88213 Ravensburg (DE); WÜRTHNER, Maik, 88048 Friedrichshafen (DE); SAUTER, Ingo, 88074 Meckenbeuren (DE)
(86) Internationale Anmeldenummer: PCT/EP2008/052772
(87) Internationale Veröffentlichungsnummer: WO 2008/119616

(56) Entgegenhaltungen:
- EP-A- 1 139 078
- EP-A2- 1 319 535
- WO-A1-2006/097498
- DE-A1- 19 837 380
- DE-A1-102004 006 696
- US-A1- 2004 176 889

## Beschreibung

Die Erfindung betrifft ein Verfahren zur vorläufigen Bestimmung der Masse eines Fahrzeugs bei Initialisierung gemäß dem Oberbegriff des Patentanspruchs 1 sowie eine Vorrichtung zur Durchführung dieses Verfahrens gemäß Patentanspruch 10.

Die Bestimmung der Masse eines Fahrzeugs und insbesondere eines Kraftfahrzeugs ist aus vielfältigen Gründen von Nutzen. Sie kann dazu dienen, das Gesamtgewicht des Fahrzeugs zu ermitteln und beispielsweise mit einem höchsten zulässigen Gesamtgewicht zu vergleichen. Auch kann durch Abzug eines bekannten Leergewichtes des Fahrzeugs oder eines zu einem früheren Zeitpunkt ermittelten Gesamtgewichts das Gewicht der Ladung bzw. die Veränderung der Zuladung ermittelt werden, wobei selbstverständlich auch andersherum das Gesamtgewicht aus dem bekannten Leergewicht und einer ermittelten Zuladung bestimmt werden kann. Dies ermöglicht eine Auswertung in Bezug auf gesetzliche Bestimmungen, etwa hinsichtlich einer höchstzulässige Achslast oder ein höchstes zulässiges Gesamtgewicht des Fahrzeugs, und/oder hinsichtlich technisch-konstruktiver Lastgrenzen.

Weiter kann der Wert der Masse bzw. des Gewichts des Fahrzeugs auch als wesentliche Eingangsgröße in Steuerungs- und/oder Regelungsvorrichtungen des Fahrzeugs eingehen, die beispielsweise die Ansteuerung des Antribsmotors, des Getriebes, des Bremssystems und/oder von Stabilisierungseinrichtungen beeinflussen. Bei Fahrzeugen mit modernen, automatisierten Schaltgetrieben ist es beispielsweise erwünscht, den jeweils zu wählenden Gang neben den bekannten Leistungsparametern des Antriebsmotors, des Antriebsstranges, der Fahrgeschwindigkeit des Fahrzeugs und der gewünschten Beschleunigung auch in Abhängigkeit von der Gesamtmasse des Fahrzeugs zu wählen, da bei einem schwer beladenen Fahrzeug wesentlich höhere Drehmomente und damit ein niedrigerer Gang bei höherer Motordrehzahl für eine gewünschte Beschleunigung notwendig sind, und zudem z.B. Steigungen mit steigender Fahrzeugmasse ebenfalls einen stärkeren Einfluss auf einen zu wählenden optimalen Gang ausüben, während der Einfluss von Windböen auf das Fahrzeug mit ansteigender Fahrzeugmasse abnimmt.

Zur Ermittlung der Fahrzeugmasse ist es seit langem bekannt, fahrzeugexterne Wiegevorrichtungen zu verwenden. Diese stehen jedoch oft nicht zur Verfügung und sind zudem relativ aufwendig sowie zeitintensiv in der Benutzung und/oder sie sind ortsfest und müssen daher zunächst aufwendig aufgesucht werden.

Weiter ist es beispielsweise aus der DE 100 58 045 B4 bekannt, die Fahrzeugmasse mit Hilfe fahrzeugfester Einrichtungen zu ermitteln, die auf der Ermittlung der Gewichtskraft zwischen den gefederten und ungefederten Massen des Fahrzeugs beruhen. Genauer ist es für Lastkraftwagen aus dieser Druckschrift bekannt, an allen Achsen oder zumindest an mehreren im Verhältnis zur Fahrzeuglänge relativ weit beabstandeten Achsen die Auflagekraft der gefederten Fahrzeugteile direkt oder indirekt zu messen, um daraus die Zuladung oder unter Berücksichtigung der bekannten Masse der ungefederten Fahrzeugteile das Gesamtgewicht des Fahrzeugs zu ermitteln. Selbstverständlich können hierbei alternativ oder zusätzlich, meist unter Voraussetzung einer horizontalen Fahrzeugaufstandsfläche, auch die jeweils auf einzelnen Achsen aufliegenden Teilmassen ermittelt werden, um beispielsweise die Gewichts- bzw. Masseverteilung der Zuladung zu ermitteln.

Andere Lösungsansätze ermitteln die aufliegende Gewichtskraft an anderen Stellen, beispielsweise durch Auswertung des Reifendrucks oder des Drucks zwischen einem Fahrzeuggrundgestell und einem die Nutzlast aufnehmenden Behälter, wie etwa einem Container, einem Flüssigkeitstank oder einem Kippbehälter eines Kipplasters. Diesen Ansätzen ist meist gemein, dass eine mit der zu ermittelnden Masse korrelierende physikalische Größe an mehreren geometrisch voneinander entfernten Stellen so ermittelt wird, dass die zu ermittelnde Masse zumindest nahezu vollständig auf den Messstellen aufliegt. Hierfür kann beispielsweise der pneumatische Druck in Luftfederelementen an einer vorderen und einer hinteren die Last tragenden Achse ermittelt werden.

Insbesondere sind hierzu Lösungen bekannt, die beispielsweise den pneumatischen Druck an vier, den Ecken bzw. den Rädern des Fahrzeugs zugeordneten, Stellen ermitteln. Vereinfachte Versionen dieser Grundvariante sehen zur Verringerung des apparativen Aufwandes vor, pro Achse oder pro Fahrzeugseite an Stelle von getrennten Druckwerten nur einen mittleren Druckwert zu bestimmen, indem beispielsweise die linken und rechten Federungselemente einer Achse oder die vorderen und hinteren Federungselemente einer Fahrzeugseite zu Messzwecken vorübergehend zusammengeschaltet werden.

Wenn etwa angenommen wird, dass das Fahrzeug bei üblichen Messbedingungen auf beiden Seiten der Längsachse etwa gleich stark beladen ist und auf einer für den Messzweck ausreichend ebenen Fläche steht, genügt es, wenn der Druck ohne eine Zusammenschaltung der Federungselemente lediglich auf einer Seite der Achsen gemessen wird. Weiter kann bei bekannter Verteilung der aufliegenden Last zwischen mehreren Achsen einer Achsgruppe an Stelle einer Ermittlung von Belastungswerten sämtlicher Achsen einer Achsengruppe lediglich an einer der Achsen eine Messung vorgenommen werden und der so ermittelt Wert unter Berücksichtigung der angenommenen Verteilung der Last auf die Achsen berechnet werden.

Derartige, auf einer Gewichts- bzw. Druckmessung bei stehendem Fahrzeug beruhenden Systeme sind jedoch mit einigen prinzipiellen Nachteilen behaftet: Sofern zumindest zwei Kraftmessvorrichtungen an unterschiedlichen Achsen bzw. von einander entfernten Stellen des Fahrzeugs vorgesehen werden, steigt damit der apparativen Aufwand für die Kraftmesssensoren, die Verkabelung und die Auswertungseinrichtung. Bei steigender Anzahl von Kraftmessvorrichtungen wächst dieser Aufwand annähernd proportional, wodurch sich gleichzeitig der Wartungsaufwand und die Ausfallwahrscheinlichkeit erhöht. Zudem weisen viele Lastkraftwagen an der Vorderachse Blattfedern auf, deren Federbieche sich bei steigender Beiastung aufgrund der gegenseitigen Reibung nicht kontinuierlich, sondern ruckartig verformen und so eine Kraftmessung über eine Wegmessung der Einfederung recht ungenau machen. Je stärker das System jedoch vereinfacht wird, indem beispielsweise nur an einzelnen Achsen oder auf einer Seite des Fahrzeugs physikalische Messwerte abgenommen werden, desto stärker ist der auf dieser Basis ermittelte Massewert mit Unsicherheiten und Fehlern behaftet.

Aus der DE 10 2004 019 624 B3 ist ein Achsmessgerät für pneumatische und mechanische Federungen bekannt, welches das Gesamtgewicht bzw. die Zuladung eines Fahrzeugs mit Hilfe der Ermittlung nur einer Achslast bzw. des Balgdrucks eines pneumatischen Federungsbalgs einer Achse ermöglicht. Hierfür wird ein Last-Sensorsignal-Diagramm ermittelt, indem in einem beladenen und in einem unbeladenen Zustand des Fahrzeugs die von zumindest einem Sensor an einer Achse ermittelte Auflagekraft (z.B. der Balgdruck einer pneumatischen Federung) gemessen und bekannten Beladungen zugeordnet wird. Durch die beiden so ermittelten Stützstellen einer Kennlinie kann bei Annahme eines linearen Zusammenhangs jedem erfassten Sensorwert bzw. jedem Balgdruck des pneumatischen Federungsbalges ein Gewicht bzw. eine Last zugeordnet werden. Zur Verbesserung der Genauigkeit ist vorgesehen, zusätzliche Stützstellen zu ermitteln und so auch einen nicht linearen Zusammenhang zwischen Balgdruck und Ladung mit verbesserter Genauigkeit darstellen zu können.

Dieses bekante Achslastmessgerät benötigt im Vergleich zu den vorstehend beschriebenen Systemen den geringsten apparativen Aufwand und ermöglicht damit bei vergleichsweise geringem Kostenaufwand eine für manche Zwecke ausreichend genaue Bestimmung relevanter Fahrzeugmassen. Allerdings ist die Bestimmung der Masse mit Hilfe einer gemessenen Gewichtskraft an nur einer Achse oder gar an nur einer Seite einer Achse mit größeren prinzipbedingten Unsicherheiten behaftet.

Schließlich sind Systeme zur Ermittlung der Fahrzeugmasse bekannt, die auf der Auswertung fahrdynamischer Größen beruhen. So wird beispielsweise gemäß eines in der DE 198 37 380 A1 offenbarten Verfahrens während einer zugkraftfreien Phase und einer Zugkraft-Phase des Fahrbetriebes jeweils eine Zugkraft-Größe, insbesondere das zeitliche Integral der Zugkraft, und eine Bewegungsgröße, insbesondere die Geschwindigkeitsänderung, ermittelt. Dieses Verfahren bietet den Vorteil, dass auf zusätzliche Kraft- oder Drucksensoren vollständig verzichtet werden kann, weil sämtliche benötigten Rohdaten bei einem modernen Kraftfahrzeug ohnehin für die Verwendung in anderen Fahrzeugsystemen in geeigneter Form zur Verfügung stehen. Dementsprechend fällt auch kein oder zumindest nur ein sehr geringer zusätzlicher Verkabelungsaufwand an, und die Ausfallwahrscheinlichkeit ist unabhängig von der Anzahl der Achsen.

Ganz besonders vorteilhaft ist diese Messvariante jedoch dadurch, dass sie bei geringem Aufwand ein in Bezug auf den verfolgten Zweck ausgesprochen genaues Signal zur Verfügung stellt: Insbesondere ist es für eine Getriebe- und Motorsteuerung nicht entscheidend, wie groß die physikalische Masse der Zuladung ist, sondern wie groß der am Fahrzeug angreifende Fahrwiderstand ist, der sich beispielsweise aus dem Luftwiderstand, dem Rollwiderstand, der Fahrzeugmasse und der Fahrwegsteigung zusammensetzt. Der Luftwiderstand setzt sich wiederum aus dem Luftwiderstands-Beiwert des Fahrzeugs, der Querschnittsfläche desselben, der Luftdichte und der Anströmgeschwindigkeit zusammen, wobei Letztere wiederum von der Fahrgeschwindigkeit und den herrschenden Windverhältnissen abhängig ist. Der Rollwiderstand ergibt sich in Abhängigkeit von der Bereifung, dem Reifendruck, der Federung, der aufliegenden Masse und den Straßenbelagseigenschaften.

Das in der DE 198 37 380 A1 vorgestellte Verfahren berücksichtigt alle diese Komponenten dadurch, dass nur zwei relevante Größen ermittelt und zu einander ins Verhältnis gesetzt werden, und ist damit jedem Verfahren, weiches eine Steuerung eines Antriebsmotors und/oder eines Getriebes nur auf Grundlage einer ermittelten Fahrzeugmasse durchzuführen versucht, prinzipiell weit überlegen. Der wesentliche Nachteil dieses Verfahrens besteht jedoch darin, dass zum Zeitpunkt des Anfahrens nach einer erheblichen Änderung der Fahrzeugzuladung noch keine diesbezüglichen Masseänderungsdaten zur Verfügung stehen. Dies kann insbesondere bei Lastkraftwagen eine Einschränkung der Nutzbarkeit dieses Verfahrens bedeuten.

Grundsätzlich kann bei Lastkraftwagen davon ausgegangen werden, dass für eine erhebliche Veränderung der Zuladung bzw. des Fahrzeuggesamtgewichts ein Stillstand des Fahrzeugs erforderlich ist. Es sind zwar Sonderfälle wie Asphalt-Kipplaster und Beregnungswagen bekannt, jedoch geschieht bei Letzteren die Gewichtsreduzierung während des Betriebs so langsam, dass ein Verfahren wie das oben genannte hierauf problemlos reagieren kann. Weiter wird die Beladung und Entladung, zumindest sofern es sich nicht nur um geringe Teilmengen der Ladung handelt, fast ausschließlich bei abgestelltem Fahrzeugmotor vorgenommen. Dennoch kann bei einem Anfahrvorgang nach einem Stillstand des Fahrzeugs in den meisten Fällen problemlos die zuletzt gemäß eines dynamischen Verfahrens ermittelte Fahrzeugmasse verwendet werden, um den Antriebsmotor und ein automatisiertes Getriebe zu steuern.

Trotzdem besteht insbesondere nach einem Abschalten der Zündung des Fahrzeugs die Möglichkeit, dass die zuvor ermittelte Fahrzeugmasse bzw. Zuladung sich so erheblich von dem zuvor ermittelten und gespeicherten Wert unterscheidet, dass der Anfahrvorgang nicht mit ausreichender oder gewünschter Genauigkeit gesteuert bzw. geregelt werden kann.

Vor diesem Hintergrund liegt der Erfindung die Aufgabe zugrunde, ein Verfahren zur vorläufigen Bestimmung der Masse eines Fahrzeugs bei einem Neustart bzw. bei einer Initialisierung des Fahrzeugs vorzustellen, weiches die Vorteile einer dynamischen Masseermittlung vollständig nutzen kann, ohne den vorstehend beschriebenen Nachteil aufzuweisen. Dieses Verfahren soll zudem mit einem möglichst geringen baulichen Aufwand betreibbar und störungsunanfällig sein.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem dynamischen Verfahren zur Ermittlung der Fahrzeugmasse in den meisten Fällen die letzte ermittelte Fahrzeugmasse verwendet werden kann und lediglich für denjenigen Fall, bei dem seit dem letzten Abstellen des Fahrzeugs eine erhebliche Veränderung der Fahrzeugmasse eingetreten ist, nach dem Start des Fahrzeugs auf andere Weise eine Bestimmung der aktuellen Fahrzeugmasse vorgenommen werden muss.

Demnach geht die Erfindung von einem Verfahren zur vorläufigen Bestimmung der Masse eines Fahrzeugs bei Initialisierung aus, wobei unter dem Begriff der Initialisierung zumeist das Einschalten der Zündung und ein dadurch ausgelöstes Hochfahren der am Verfahren beteiligten Steuergeräte zu verstehen ist. Nur in Ausnahmefällen kommt es vor, dass die beteiligten Steuergeräte bei einem Abschalten der Zündung des Fahrzeugs nicht heruntergefahren werden, da diese gegebenenfalls noch weitere Aufgaben übernehmen, welche auch bei abgeschalteter Zündung zur Verfügung stehen sollen. Weiter kann es vorkommen, dass ein Fahrzeug bei laufendem Antriebsmotor oder jedenfalls bei eingeschalteter Zündung entladen wird. In diesen Fällen soll als Initialisierung des Fahrzeugs ein dem In-Betrieb-Setzen bzw. In-Bewegung-Setzen des Fahrzeugs unmittelbar vorangehender Vorgang, wie beispielsweise das Starten eines Antriebsmotors des Fahrzeugs bzw. die Betätigung eines bestimmten Bedienelementes durch den Fahrer gelten. Weiter kann vorgesehen sein, dass die Initialisierung beispielsweise nach einer Überschreitung einer vorbestimmten Zeitspanne des Stillstandes des Fahrzeugs automatisch oder durch eine Betätigung eines bestimmten Bedienelementes durch den Fahrer ausgelöst wird.

Das Fahrzeug umfasst dabei ein Steuergerät, welches auf Grundlage dynamischer Bewegungsdaten des Fahrzeugs, also beispielsweise der Änderung der Beschleunigung des Fahrzeugs oder deren zeitlichen Änderungen einen aktuellen Fahrzeug-Massewert ermitteln kann. Unter dem aktuellen Fahrzeug-Massewert kann je nach Anwendungsfall ein ermittelter Wert der gesamten Fahrzeugmasse inklusive der Ladung verstanden werden. Es ist jedoch auch möglich, stattdessen oder zusätzlich das Gewicht der Zuladung oder auch das Gewicht der gefederten Masse zu ermitteln.

Da die Masse und das Gewicht eines konkreten Körpers bekanntlich an Land durch die Konstante der Erdbeschleunigung mit einander verknüpft sind und auch bei teilweise eingetauchten Fahrzeugen über eine zusätzliche Berücksichtigung des verdrängten Volumens und dessen spezifischer Dichte leicht zur berechnen sind, soll hier und im Folgenden auf eine Unterscheidung zwischen der Masse und der damit verbundenen Gewichtskraft verzichtet werden. Auch ist das Leergewicht von Fahrzeugen üblicherweise ausreichend genau bekannt, um die Zuladung des Fahrzeugs durch einfache Subtraktion des Leergewichtes vom Gesamtgewicht des Fahrzeugs zu ermitteln. Weiter ist es gerade in Bezug auf eine Ermittlung eines Achslastwertes üblich, einen physikalischen Sensor zwischen dem gefederten Teil und dem ungefederten Teil des Fahrzeugs vorzusehen. Da die Masse des ungefederten Teils des Fahrzeugs weitgehend konstant ist, lassen sich diese Werte durch einfache Addition bzw. Subtraktion voneinander ableiten. Diesbezüglich unterschiedliche Ausprägungen stellen damit äquivalente Lösungen dar, die in vollem Umfang in den hier beanspruchten Schutzbereich fallen sollen.

Weiter ist vorgesehen, dass das Steuergerät in einem Datenspeicher, der optional auch Bestandteil des Steuergerätes sein kann, bei Deinitialisierung des Fahrzeugs, also in den meisten Fällen bei Ausschalten der Zündung, den zuletzt dynamisch ermittelten Fahrzeug-Massewert speichert, und dass das Steuergerät bei oder unmittelbar nach Initialisierung des Fahrzeugs den im Datenspeicher abgespeicherten, zuletzt ermittelten dynamischen Fahrzeug-Massewert wieder einliest und für weitere Aufgaben verwendet.

Zur Lösung der gestellten Aufgabe ist vorgesehen, dass das Steuergerät zusätzlich die Achslast zumindest einer Hinterachse des Fahrzeugs mittels eines statischen Verfahrens ermittelt, indem es zumindest einen mit der Achslast korrelierenden physikalischen Messwert einliest und auf dessen Grundlage einen statisch ermittelten Fahrzeug-Massewert ermittelt. Selbstverständlich ist es hierbei grundsätzlich möglich, alle bekannten Arten einer derartigen statischen, also bei stehendem Fahrzeug durchzuführenden, Achslastermittlung anzuwenden.

Analog zu den vorstehend gemachten Anmerkungen zum Fahrzeug-Massewert ist es hier wiederum unerheblich, ob in einer konkreten Ausführungsform ein Massewert oder, wie üblich, im physikalischen Sinne eine Gewichtskraft bzw. ein Druck bestimmt wird. Ebenso soll unter der Achslast wahlweise sowohl ein zwischen einer Achse und einem gefederten Aufbau des Fahrzeugs gemessener Wert, als auch ein von der Achse in Richtung des Untergrundes ausgeübter Wert, oder ein unterhalb der Achse auf den Untergrund ausgeübter Wert verstanden werden.

Bei üblicherweise gegebener Kenntnis des anteilig auf eine Achse entfallenden Anteils der ungefederten Masse des Fahrzeugs lassen sich diese Werte leicht in einander umrechnen und sollen daher im Rahmen dieser Ausführungen als äquivalent gelten. So kann beispielsweise bei einem gegebenen Fahrzeug die zwischen der Hinterachse und dem gefederten Aufbau ermittelte Achslast, die etwa durch einen Drucksensor am Gegeniager der Feder einer Radfederung ermittelt werden kann, leicht um die anteilige Masse des ungefederten Fahrgestells von beispielsweise 600 kg erhöht werden, wodurch sich der selbe Wert ergibt, den man bei einer Ermittlung der Achslast an der Aufstandsfläche der Reifen der Achse erhalten würde. Ebenso ist es beispielsweise bei einem Kipplaster möglich und sinnvoll, eine Änderung der Zuladung nicht im Bereich zwischen den gefederten und ungefederten Massen zu ermitteln, sondern beispielsweise aus dem zum Anheben des Kippbehälters notwendigen Hydraulikdruck und damit zwischen Kippauflieger und dem Grundgestell zu ermitteln.

Schließlich soll der Begriff der Hinterachse hier und im Folgenden rein funktional in Hinblick auf den vorliegenden Zweck verstanden werden und selbstverständlich auch für Fahrzeuge mit hinteren Wellen oder Einzelradaufhängung entsprechend gelten. Insbesondere ist unter Hinterachse hier nicht in jedem Fall die hinterste Achse eines Fahrzeugs zu verstehen, sondern eine Achse, deren Achslast bei bestimmungsgemäßer Nutzung des Fahrzeugs wesentlich durch eine Veränderung der Zuladung beeinflusst wird. So können bei einem Fahrzeug mit Sattelauflieger, das eine gelenkte Vorderachse, zwei hintere Achsen des Zugfahrzeugs und drei hintere Achsen des Sattelaufliegers aufweist, alle Achsen mit Ausnahme der vordersten Achse zur Bestimmung eines statisch ermittelten, aktuellen Massewertes des Fahrzeugs verwendet werden. In Sonderfällen, beispielsweise bei manchen speziellen Bergwerksfahrzeugen, kann es sogar vorkommen, dass das Fahrzeug dazu ausgelegt ist, im Bereich der vordersten Achse erhebliche Nutzlasten zu tragen. In diesem Fall könnte sogar die vorderste Achse des Fahrzeugs eine Hinterachse im Sinne der Erfindung sein.

Da die Aufzählung der in Frage kommenden Orte der Ermittlung relevanter Größen in Kombination mit unterschiedlichsten Fahrzeugauslegungen das Verständnis der wesentlichen Merkmale des erfindungsgemäßen Verfahrens sehr erschweren würde, sollen hier und im Folgenden die Begriff der Masse, der Achslast und der Hinterachse in dem zuvor definierten, sehr weiten Sinne verwendet werden.

Entscheidend für das erfindungsgemäße Verfahren ist weiter, dass das Steuergerät zumindest einen mit der Achslast korrespondierenden physikalischen Messwert einliest und auf dessen Grundlage, gegebenenfalls nach entsprechender Umrechnung auf eine einheitliche Bezugsgröße oder sonstigen Aufbereitung, einen statisch ermittelten Fahrzeug-Massewert ermittelt und diesen mit dem aus dem Speicher ausgelesenen, zuletzt dynamisch ermittelten Fahrzeug-Massewert vergleicht, und in demjenigen Fall, in dem der statisch ermittelte Fahrzeug-Massewert um mehr als einen vorbestimmten Toleranzbereich von dem zuletzt dynamisch ermittelten Fahrzeug-Massewert abweicht, den statisch ermittelten Fahrzeug-Massewert als relevanten Fahrzeug-Massewert annimmt, sowie andernfalls den zuletzt dynamisch ermittelten Fahrzeug-Massewert als relevanten Fahrzeug-Massewert verwendet.

Auf diese Weise kann bei geringstem apparativem Aufwand sichergestellt werden, dass nach einer erheblichen Veränderung der Fahrzeugmasse durch Be- oder Entladung nicht mit dem zuvor ermittelten dynamischen Massewert gearbeitet wird, bis das Steuergerät die Gelegenheit hatte, diesen durch geeignete dynamische Messungen zu korrigieren. Insbesondere steht damit für den ersten Anfahrvorgang nach einer erheblichen Veränderung der Beladung des Fahrzeugs ein brauchbarer Massewert zur Auswahl eines optimalen Anfahrgangs von mehreren Anfahrgängen des Getriebes zur Verfügung.

Gleichzeitig kann auf diese Weise der Aufwand für die Ermittlung des statischen Massewertes weitestgehend minimiert werden, da dieser ohnehin nur in dem beschriebenen Sonderfall der erheblichen Ladungsveränderung zum Einsatz kommt und auch dann nach kürzester Zeit durch den neu und dynamisch zu ermittelnden Massewert ersetzt wird. Wie schon ausgeführt wurde, ist letzterer Massewert für Zwecke der fahrdynamischen Steuerung bzw. Regelung von Fahrzeugaggregaten und Fahrstabilitätsfunktionen ohnehin erheblich besser geeignet.

Dementsprechend ist es unter ökonomischen Gesichtspunkten sinnvoll, wenn das Steuergerät den statisch ermittelten Fahrzeug-Massewert auf der Grundlage der Daten von maximal zwei Sensoren bestimmt, welche im Wesentlichen auf einer gemeinsamen horizontalen Senkrechenten zur Längsachse des Fahrzeugs angeordnet sind, und in der Regel die Auflagekraft einer hinteren Achse des Fahrzeugs ermitteln. Die Details einer beispielhaft möglichen Ermittlung eines Fahrzeug-Massewertes mit Hilfe der Achslast an nur einer Fahrzeugachse ist weiter vorne bereits beschrieben worden.

Wenn das Steuergerät den statisch ermittelten Fahrzeug-Massewert jedoch auf der Grundlage der Daten von zumindest einem Sensor ermittelt, der entweder im Bereich der vordersten aller Hinterachse oder im Bereich der Auflagefläche eines Sattelaufliegers oder im vordersten Bereich eines die Nutzlast aufnehmenden Behälters angeordnet ist, bietet dies zusätzlich den Vorteil kürzestmöglicher Verkabelungs- oder Funkübertragungswege. Insbesondere bei Zugfahrzeugen für Sattelauflieger kommt noch hinzu, dass das gesamte sensorische System am Zugfahrzeug untergebracht werden kann und damit mit beliebigen Sattelaufliegern ohne Umrüstung oder Nachrüstung funktioniert.

Eine besonders einfache und robuste Möglichkeit der Ermittlung eines statischen Fahrzeug-Massewertes ergibt sich, wenn der zumindest eine Sensor ein druckempfindlicher Sensor ist, da diese in der erforderlichen Belastbarkeit und Robustheit in großer Auswahl und zu günstigen Preisen verfügbar sind. Insbesondere eignen sich hierzu piezoelektrische Drucksensoren, da diese aufgrund ihrer Eigenschaften und wegen ihrer geringen Abmessungen an nahezu beliebigen Stellen montiert oder nachgerüstet werden können, ohne hierfür Elemente des Fahrwerks, der Federung oder des Aufbaus mehr als minimal anpassen zu müssen.

Sofern jedoch eine Achsen- oder Aufbau-Federung auf der Basis von pneumatischen Federungselementen vorliegt, kann zumindest ebenso vorteilhaft ein Drucksensor eingesetzt werden, der einen Druck in zumindest einem pneumatischen Federungselement des Fahrzeugs ermittelt.

Da ein durch einen solchen pneumatischen Drucksensor ermittelter Sensorwert in den meisten Fällen - aufgrund der sich über den Belastungsbereich der pneumatischen Feder verändernden Auflagefläche der Feder und gegebenenfalls aufgrund weiterer Effekte wie einem Temperatureinfluss - nicht linear ist, ist es in diesem Fall besonders vorteilhaft, wenn das Steuergerät unter Berücksichtigung zumindest einer sich über den Druck ändernden Auflagefläche in dem pneumatischen Federelement einen korrigierten Druckwert ermittelt. Dies kann in der Praxis leicht durch eine Tabelle mit entsprechenden Korrekturwerten erfolgen.

Da insbesondere Anhänger mit großer Zuladung meistens wenigstens zwei getrennte Achsen aufweisen und ein solcher Anhänger im Stillstand des Fahrzeugs nicht durch eine zusätzliche aufgebrachte Kraft z.B. in Form einer Stützlast zu detektieren ist, ist es gerade für Lastkraftwagen mit Anhängerkupplung sinnvoll, wenn das Steuergerät zusätzlich zumindest bei der eingangs definierten Initialisierung überprüft, ob an das Zugfahrzeug ein Anhänger angekoppelt oder von diesem abgekoppelt wurde.

Dies kann beispielsweise besonders einfach dadurch geschehen, dass bei Deinitialisierung des Systems abgespeichert wird, ob zu diesem Zeitpunkt ein Anhänger an dem Zugfahrzeug angekoppelt ist. Dieser abgespeicherte Zustand wird dann mit dem Zustand bei einer späteren Initialisierung des Systems verglichen. Die eigentliche Detektion kann auf einfache Weise beispielsweise mittels eines Sensors an der Anhängerkupplung oder noch günstiger über eine Auswertung der Stromversorgungsleitungen zum Anhänger vorgenommen werden. Selbstverständlich sind auch andere Detektionsarten, beispielsweise über eine per Kabel oder drahtlos vorgenommene Übertragung einer Kennung möglich, die beispielsweise die Anhängerklasse im Sinne eines üblichen oder maximalen Gewichtes bzw. Zuladung des Anhängers umfassen kann.

Sofern der Anhänger mit einem System zur Ermittlung eines eigenen Anhängermassewertes ausgestattet ist, ist es natürlich vorzuziehen, diesen aktuellen Anhängermassewert an das diesbezügliche Steuergerät des Zugfahrzeugs zu übertragen und bei der Ermittlung des Fahrzeug-Massewertes zu berücksichtigen.

Sofern das Steuergerät eine Ankoppelung eines Anhängers feststellt und der Anhänger keinen eigenen Anhängermassewert übermittelt, kann die Genauigkeit des statisch ermittelten Massewertes für das Gesamtfahrzeug dennoch zumindest verbessert werden, wenn der ermittelten Fahrzeug-Massewert in diesem Fall um einen vorbestimmten oder vorwählbaren anhängerbezogenen Massewert erhöht wird.

Beispielsweise kann der Massewert bei üblichen Lastkraftwagen zumindest um ein übliches mittleres Leergewicht eines Deichselanhängers erhöht werden. Noch sinnvoller ist es jedoch, wenn der Fahrer durch manuelle Eingange in das Steuergerät einen Zuschlagswert einstellen kann, der entweder in einer konkreten Gewichtseinheit eingegeben werden kann, oder mit Hilfe von z.B. Symbolen an einem Einstellelement mit mehreren Schaltstellungen einstellbar ist. Sofern regelmäßig Güter mit relativ geringer Dichte transportiert werden, kann dieses Bedienelement auf einem einmal eingestellten Wert verbleiben. Sofern das Gewicht der gezogenen Anhänger jedoch stark variiert, kann der Fahrer auf diese Weise bei Bedarf mit einem einfachen Handgriff dennoch eine ausreichend genaue Ermittlung der Fahrzeugmasse sicherstellen.

Nachfolgend wird eine Vorrichtung zur Durchführung des vorstehend beschriebenen Verfahrens vorgestellt:
In einem für die Durchführung des Verfahrens gemäß der Erfindung ausgerüsteten Fahrzeug ist ein Steuergerät vorhanden, welches eine Einrichtung zur dynamischen Ermittlung eines Fahrzeug-Massewertes auf der Grundlage eingelesener dynamischer Bewegungsdaten des Fahrzeugs aufweist. Dabei ist im Fahrzeug und bevorzugt im Steuergerät ein Datenspeicher vorhanden, in dem ein bei einer Deinitialisierung des Steuergerätes der zuletzt dynamisch ermittelte Fahrzeug-Massewert abgespeichert werden kann.

Weiter ist das Steuergerät so ausgestaltet, dass bei oder unmittelbar nach einer Initialisierung des Steuergerätes der zuvor abgespeicherte, zuletzt ermittelte dynamische Fahrzeug-Massewert aus dem Datenspeicher in eine Vergleichseinrichtung des Steuergerätes eingelesen werden kann.

Außerdem ist zumindest ein Sensors zur Ermittlung einer Achslast zumindest einer Hinterachse des Fahrzeugs vorhanden und signaltechnisch so mit dem Steuergerät verbunden, dass das Steuergerät den Sensorwert einlesen kann. Das Steuergerät umfasst dabei eine Ermittlungseinrichtung zur Bildung eines statisch ermittelten Fahrzeug-Massewertes auf Basis des eingelesenen Sensorwertes.

Der statisch ermittelte Fahrzeug-Massewertes wird ebenfalls an die Vergleichseinrichtung des Steuergerätes übergeben, die dazu ausgebildet ist zu ermitteln, ob ein eingelesener dynamischer Massewert und ein ermittelter statischer Massewert innerhalb eines vorbestimmbaren Toleranzbandes liegen. Dabei kommt es letztlich nur auf die Beabstandung der Werte zueinander in absoluten oder prozentualen Werten an, so dass an Stelle einer Definition eines Toleranzbandes um den dynamisch ermittelten Fahrzeug-Massewert selbstverständlich auch ein Toleranzband um den dynamisch ermittelten Fahrzeug-Massewert definiert werden kann.

Das Steuergerät ist zudem so ausgebildet, dass dieses für den Fall, dass einer der Fahrzeug-Massewerte innerhalb des Toleranzbandes des jeweils andern Fahrzeug-Massewertes liegt, den zuletzt dynamisch ermittelten Fahrzeug-Massewert annimmt, und andernfalls den statisch ermittelten Fahrzeug-Massewert als relevanten Fahrzeug-Massewert verwendet und an eine Ausgabeeinrichtung übergibt, auf andere Steuergeräte zugreifen können.

Schließlich ist zumindest ein anderes Steuergerät vorgesehen, das diesen relevanten Massewert so lange aus dem Steuergerät auslesen kann, bis das Steuergerät bzw. die Einrichtung zur dynamischen Ermittlung eines Fahrzeug-Massewertes einen dynamischen Massewert mit höherer Genauigkeit oder Zweckdienlichkeit bereitzustellen in der Lage ist.

Das vorgestellte Verfahren und die zugehörige Vorrichtung können grundsätzlich auch bei schienengebundenen Fahrzeugen und Personenkraftwagen vorteilhaft angewandt werden. Sie finden jedoch mit besonders großem Nutzen bei Fahrzeugen mit im Verhältnis zum Leergewicht starken möglichen Schwankungen der Zuladung, insbesondere bei Lastkraftwagen und ganz besonders bei Schwerlastkraftwagen Verwendung.

Da gerade diese Fahrzeuge im Bereich der Hinterachsen oft eine pneumatische Federung aufweisen, ist es vorteilhaft, wenn der zumindest eine Sensor zur Ermittlung einer Achslast zumindest einer Hinterachse des Fahrzeugs ein Drucksensor zur Ermittlung eines Innendrucks eines pneumatischen Federungselementes ist.

Aus den bereits erläuterten Gründen ist es auch hier sinnvoll, wenn das Steuergerät eine Korrektureinrichtung aufweist, welche einen Einfluss eines sich mit dem Druck eines pneumatischen Federungselementes ändernden tragenden Querschnittes zu kompensieren in der Lage ist.

Die Erfindung lässt sich anhand eines Ausführungsbeispiels weiter erläutern. Dazu ist der Beschreibung eine Zeichnung beigefügt.

Diese zeigt einen skizzenhaften und stark vereinfachten Aufbau einer Vorrichtung zur Durchführung des erfindungsgemäßen Verfahrens.

Hierbei ist ein symbolisch dargestelltes Fahrzeug 1 in Form eines Lastkraftwagens mit einem erfindungsgemäßem Steuergerät 2, einem Antriebsmotor 3 und einem automatisiertem Schaltgetriebe 4 dargestellt. Der Antriebsmotor 3 wird von einem Motor-Steuergerät 5 und das automatisierte Schaltgetriebe 4 wird von einem Getriebe-Steuergerät 6 gesteuert, die - wie symbolisch durch einen Doppelpfeil dargestellt ist - mit einander in gegenseitigem Datenaustausch stehen. Weiter weist der Lastkraftwagen 1 eine vordere und eine hintere pneumatische Federung 7 und 8 auf, wobei nur die in Vorwärtsfahrtrichtung gesehen hintere pneumatische Federung 8 einen über die Druckleitung 10 mit dieser verbundenen Sensor 9 zur Ermittlung der Achslast aufweist, der hier als ein pneumatischer Drucksensor 9 ausgebildet ist.

Das Steuergerät 2 umfasst eine Einrichtung 11 zur dynamischen Ermittlung eines Fahrzeug-Massewertes, den dieses auf der Grundlage von Daten des Motor-Steuergerätes 5 und des Getriebe-Steuergerätes 6 in bekannter Weise bildet. Auch hierbei sind die zugehörigen Datenverbindungen durch Pfeile angedeutet. Bei Deinitialisierung des Fahrzeugs 1 bzw. des Steuergerätes 2 wird der zuletzt ermittelte dynamische Fahrzeug-Massewert in einem Datenspeicher 12 gespeichert.

Bei Initialisierung des Fahrzeugs 1 bzw. des Steuergerätes 2 wird auf der Grundlage eines von dem Sensor 9 ermittelten Wertes der Achslast von einer im Steuergerät 2 befindlichen Einrichtung 13 zur Bildung eines statisch ermittelten Fahrzeug-Massewertes ein statischer Fahrzeug-Massewert gebildet. Genauer gesagt wird das Drucksignal des Sensors 9 zunächst in einer Korrektureinrichtung 14 um bekannte Effekte bereinigt, die auf der mit wechselndem Druck wechselnden Auflagefläche der hinteren pneumatischen Federung 8 beruhen.

Eine Vergleichseinrichtung 15 liest den in dem Datenspeicher 12 abgelegten letzen dynamischen Fahrzeug-Massewert und den in der Einrichtung 13 zur Bildung eines statisch ermittelten Fahrzeug-Massewertes gebildeten, statischem Fahrzeug-Massewert ein und ermittelt, ob der statische Fahrzeug- Massewert innerhalb eines in diesem Beispiel fest vorgegebenen Toleranzbandes von ±15 % mit dem dynamischen Fahrzeug-Massewert übereinstimmt.

Ist dies der Fall, so kann davon ausgegangen werden, dass sich die Masse des Fahrzeugs 1 seit der Deinitialisierung nur unwesentlich verändert hat. In diesem Fall übermittelt die Vergleichseinrichtung 15 den dynamisch ermittelten Fahrzeug-Massewert an eine Ausgabeeinrichtung 16, die diesen Wert beispielsweise dem Motor-Steuergerät 5 und dem Getriebe-Steuergerät 6 zur Verfügung stellt.

Ist die Abweichung zwischen dem dynamisch ermittelten Fahrzeug-Massewert und dem statisch ermittelten Fahrzeug-Massewert jedoch größer als in diesem Beispiel ±15%, so kann von einer erheblichen Veränderung der Fahrzeugmasse ausgegangen werden, weshalb die Vergleichseinrichtung 15 den statisch ermittelten Fahrzeug-Massewert an die Ausgabeeinrichtung 16 übermittelt.

Sobald im späteren Fährbetrieb durch die Einrichtung 11 zur dynamischen Ermittlung eines Fahrzeug-Massewertes ein genauerer Fahrzeug-Massewert ermittelt wurde, übergibt diese den dynamisch ermittelten Fahrzeug-Massewert an die Ausgabeeinrichtung 16, welche diesen an das Motor-Steuergerät 5 und das Getriebe-Steuergerät 6 weiterleitet.

Auf diese Weise steht bei geringem apparativem und berechnungstechnischem Aufwand stets ein Fahrzeug-Massewert zur Verfügung, der für die Steuerung von z.B. dem Motor-Steuergerät 5 und dem Getriebesteuergerät 6 hervorragend geeignet ist.

Die jeweiligen Fahrzeug-Massewerte, ob nun statisch oder dynamisch ermittelt, werden bevorzugt in ein Datenbus-System wie einem CAN-Bus eingespeist, so dass diese auch anderen Steuergeräten für deren Steuerungs- und Regelungsaufgaben zur Verfügung stehen, etwa für Fahrstabilitäts- und/oder Antriebsschlupf-Regelungsaufgaben.

### Bezugszeichen

- 1: Fahrzeug, Lastkraftwagen
- 2: Steuergerät
- 3: Antriebsmotor
- 4: Automatisiertes Schaltgetriebe
- 5: Motor-Steuergerät
- 6: Getriebe-Steuergerät
- 7: Vordere pneumatische Federung
- 8: Hintere pneumatische Federung
- 9: Sensor, pneumatischer Drucksensor
- 10: Druckleitung
- 11: Einrichtung zur dynamischen Ermittlung eines Fahrzeug-Massewertes
- 12: Datenspeicher
- 13: Einrichtung zur statischen Ermittlung eines Fahrzeug-Massewertes
- 14: Korrektureinrichtung
- 15: Vergleichseinrichtung
- 16: Ausgabeeinrichtung

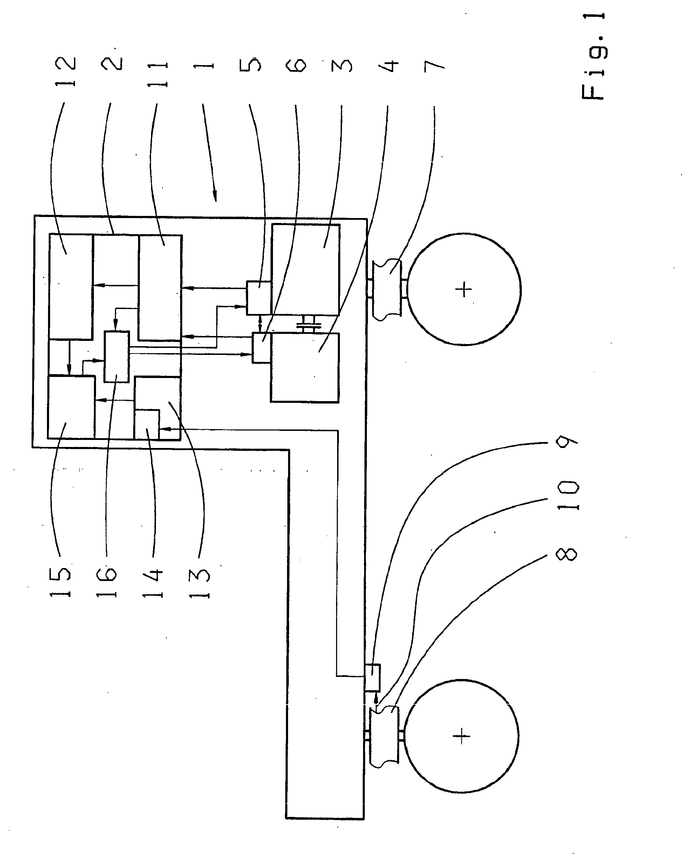

## Patentansprüche

1. Verfahren zur vorläufigen Bestimmung der Masse eines Fahrzeugs (1) bei Initialisierung, wobei das Fahrzeug (1) ein Steuergerät (2) umfasst, welches auf Grundlage dynamischer Bewegungsdaten des Fahrzeugs (1) einen aktuellen Fahrzeug-Massewert ermittelt, wobei das Steuergerät weiter in einem Datenspeicher (12) bei Deinitialisierung des Steuergerätes (2) den zuletzt dynamisch ermittelten Fahrzeug-Massewert abspeichert und wobei das Steuergerät (2) bei oder unmittelbar nach Initialisierung des Steuergerätes (2) den im Datenspeicher (12) abgespeicherten, zuletzt ermittelten dynamischen Fahrzeug-Massewert einliest, **dadurch gekennzeichnet, dass** das Steuergerät (2) zusätzlich die Achslast zumindest einer Hinterachse des Fahrzeugs (1) mittels eines statischen Verfahrens ermittelt, indem es zumindest einen mit der Achslast korrelierenden physikalischen Messwert einliest und auf dessen Grundlage einen statisch ermittelten Fahrzeug-Massewert ermittelt, diesen mit dem zuletzt dynamisch ermittelten Fahrzeug-Massewert vergleicht und für den Fall, dass der statisch ermittelte Fahrzeug-Massewert um mehr als einen vorbestimmten Toleranzbereich von dem zuletzt dynamisch ermittelten abweicht, den statisch ermittelten Fahrzeug-Massewert als relevanten Fahrzeug-Massewert annimmt sowie andernfalls den zuletzt dynamisch ermittelten Fahrzeug-Massewert als relevanten Fahrzeug-Massewert verwendet.

2. Verfahren nach Anspruch 1, **dadurch gekennzeichnet, dass** das Steuergerät (2) den statisch ermittelten Fahrzeug-Massewert auf der Grundlage der Daten von maximal zwei Sensoren (9) bestimmt, welche im Wesentlichen auf einer gemeinsamen horizontalen Senkrechenten zur Längsachse des Fahrzeugs (1) angeordnet sind.

3. Verfahren nach Anspruch 1 oder 2, **dadurch gekennzeichnet, dass** das Steuergerät (2) den statisch ermittelten Fahrzeug-Massewert auf der Grundlage der Daten von zumindest einem Sensor (9) ermittelt, der entweder im Bereich der vordersten Hinterachse oder im Bereich der Auflagefläche eines Sattelaufliegers oder im vordersten Bereich eines die Nutzlast aufnehmenden Behälters angeordnet ist.

4. Verfahren nach zumindest einem der Ansprüche 1 bis 3, **dadurch gekennzeichnet, dass** als zumindest einzigen Sensor (9) ein druckempfindlicher Sensor verwendet wird.

5. Verfahren nach Anspruch 4, **dadurch gekennzeichnet, dass** als Sensor (9) ein piezoelektrischer Drucksensor verwendet wird.

6. Verfahren nach Anspruch 4, **dadurch gekennzeichnet, dass** als Sensor (9) ein Drucksensor verwendet wird, der einen Druck in einem pneumatischen Federungselement (8) des Fahrzeugs ermittelt.

7. Verfahren nach Anspruch 6, **dadurch gekennzeichnet, dass** das Steuergerät (2) auf der Basis eines durch den Drucksensor (9) ermittelten Sensorwertes unter Berücksichtigung einer sich über den Druck ändernden Auflagefläche in dem pneumatischen Federelement einen korrigierten Druckwert ermittelt.

8. Verfahren nach zumindest einem der vorherigen Ansprüche, **dadurch gekennzeichnet, dass** das Steuergerät (2) zusätzlich zumindest bei Initialisierung überprüft, ob ein Anhänger an das Fahrzeug an- oder abgekoppelt wurde und ob ein eigener Anhängermassewert zur Verfügung steht, wobei bei vorhandenem Anhängermassewert dieser bei der Ermittlung des Fahrzeug-Massewertes berücksichtigt wird.

9. Verfahren nach Anspruch 8, **dadurch gekennzeichnet, dass** das Steuergerät (2), sofern es eine Ankoppelung eines Anhängers feststellt und der Anhänger keinen eigenen Anhängermassewert übermittelt, den ermittelten Fahrzeug-Massewert um einen vorbestimmten oder vorwählbaren , anhängerbezogenen Massewert erhöht.

10. Vorrichtung zur Durchführung des Verfahrens nach zumindest einem der Ansprüche 1 bis 9, wobei in einem Fahrzeug (1) ein Steuergerät (2) mit einer Einrichtung (11) zur Ermittlung eines dynamischen Fahrzeug-Massewertes auf der Grundlage eingelesener dynamischer Bewegungsdaten des Fahrzeugs (1) vorhanden ist, welches **dadurch gekennzeichnet ist, dass** ein Datenspeicher (12) zur Abspeicherung von einem bei einer Deinitialisierung des Steuergerätes zuletzt dynamisch ermittelter Fahrzeug-Massewert vorhanden ist,
dass das Steuergerät (2) so ausgebildet ist, dass bei oder unmittelbar nach einer Initialisierung des Steuergerätes (2) der zuvor abgespeicherte, zuletzt ermittelte dynamische Fahrzeug-Massewert aus dem Datenspeicher (12) in eine Vergleichseinrichtung (15) des Steuergerätes (2) einlesbar ist,
dass zumindest ein Sensor (9) zur Ermittlung einer Achslast zumindest einer Hinterachse des Fahrzeugs vorhanden ist und der Sensor (9) signaltechnisch so mit dem Steuergerät (2) verbunden ist,
dass eine Einrichtung (13) zur statischen Ermittlung eines Fahrzeug-Massewertes des Steuergerätes (2) den Sensorwert des Sensors (9) einlesen kann, dass das Steuergerät (2) so ausgebildet ist, dass der zuvor in der Einrichtung zur statischen Ermittlung eines Fahrzeug-Massewertes (13) ermittelte, statische Fahrzeug-Massewert in die Vergleichseinrichtung (15) des Steuergerätes (2) eingelesen werden kann,
dass die Vergleichseinrichtung (15) dazu ausgebildet ist, zu ermitteln, ob ein ermittelter statischer Massewert innerhalb eines vorbestimmbaren Toleranzbandes um den eingelesenen dynamischer Massewert liegt,
dass die Steuerungseinrichtung so ausgebildet ist, dass in demjenigen Fall, in dem ein statischer Massewert im Tolleranzband liegt, der zuletzt dynamisch ermittelten Fahrzeug-Massewert und andernfalls der statisch ermittelten Fahrzeug-Massewert als relevanter Fahrzeug-Massewert an eine Ausgabeeinrichtung (16) des Steuergerätes (2) übergeben werden kann,
und dass der relevante Massewert vom Steuergerät (2) bzw. der Ausgabeeinrichtung (16) so lange zum Auslesen durch zumindest ein anderes Steuergerät (5, 6) bereitgehalten wird, bis die Einrichtung zur dynamischen Ermittlung des Fahrzeug-Massewertes (11) einen dynamischen Massewert mit höherer Genauigkeit oder Zweckdienlichkeit bereitzustellen in der Lage ist.

11. Vorrichtung nach Anspruch 10, **dadurch gekennzeichnet, dass** das Fahrzeug (1) ein Lastkraftwagen (1) ist.

12. Vorrichtung nach zumindest einem der Ansprüche 10 bis 11,
**dadurch gekennzeichnet, dass** der zumindest eine Sensor (9) zur Ermittlung einer Achslast zumindest einer Hinterachse des Fahrzeugs (1) ein Drucksensor (9) zur Ermittlung eines Innendrucks eines pneumatischen Federungselementes (8) ist.

13. Vorrichtung nach zumindest einem der vorherigen Ansprüche,
**dadurch gekennzeichnet, dass** das Steuergerät (2) eine Korrektureinrichtung (14) aufweist, welche einen Einfluss einer sich mit dem Druck eines pneumatischen Federungselementes (8) ändernden, tragenden Querschnittes zu kompensieren in der Lage ist.

## Claims

1. Method for the preliminary determination of the mass of a vehicle (1) on initialization, wherein the vehicle (1) comprises a control device (2) which determines a current vehicle mass value on the basis of dynamic movement data of the vehicle (1), wherein the control device furthermore stores the last dynamically determined vehicle mass value in a data memory (12) on deinitialization of the control device (2) and wherein the control device (2) reads in the last determined dynamic vehicle mass value stored in the data memory (12) on or immediately after initialization of the control device (2), **characterized in that** the control device (2) additionally determines the axial load at least of a rear axle of the vehicle (1) by means of a static method **in that** it reads in at least one physical measurement value which correlates to the axial load and on the basis of which determines a statically determined vehicle mass value, compares this with the last dynamically determined vehicle mass value and, in the event that the statically determined vehicle mass value deviates from the last dynamically determined value by more than a predetermined tolerance range, assumes the statically determined vehicle mass value as a relevant vehicle mass value and otherwise uses the last dynamically determined vehicle mass value as the relevant vehicle mass value.

2. Method according to Claim 1, **characterized in that** the control device (2) ascertains the statically determined vehicle mass value on the basis of the data of a maximum of two sensors (9) which are arranged substantially on a common horizontal perpendicular to the longitudinal axis of the vehicle (1).

3. Method according to Claim 1 or 2, **characterized in that** the control device (2) determines the statically determined vehicle mass value on the basis of the data of at least one sensor (9) which is arranged either in the region of the foremost rear axle or in the region of the bearing surface of a semi-trailer or in the foremost region of a container which accommodates the cargo.

4. Method according to one of Claims 1 to 3, **characterized in that** a pressure-sensitive sensor is used as the at least single sensor (9).

5. Method according to Claim 4, **characterized in that** a piezoelectric pressure sensor is used as the sensor (9).

6. Method according to Claim 4, **characterized in that** a pressure sensor which determines a pressure in a pneumatic spring suspension element (8) of the vehicle as the sensor (9).

7. Method according to Claim 6, **characterized in that** the control device (2) determines a corrected pressure value on the basis of a sensor value determined by the pressure sensor (9) taking into account a bearing surface, which changes with pressure, in the pneumatic spring element.

8. Method according to at least one of the preceding claims, **characterized in that** the control device (2) additionally checks at least on initialisation whether a trailer has been attached to or detached from the vehicle and whether a separate trailer mass value is available, wherein in the case of a trailer mass value being present this is taken into account in the determination of the vehicle mass value.

9. Method according to Claim 8, **characterized in that** the control device (2), in so far as it identifies a coupling of a trailer and the trailer does not transmit a separate trailer mass value, increases the determined vehicle mass value by a predetermined or preselectable, trailer-dependent mass value.

10. Device for carrying out the method according to at least one of Claims 1 to 9, wherein a control device (2) with an apparatus (11) for determining a dynamic vehicle mass value on the basis of read-in dynamic movement data of the vehicle (1) is present in a vehicle (1), which is **characterized in that** a data memory (12) for storing a last dynamically determined vehicle mass value on a deinitialization of the control device is present, that the control device (2) is formed such that the previously stored, last determined dynamic vehicle mass value can be read in from the data memory (12) into a comparison apparatus (15) of the control device (2) on or immediately after an initialization of the control device (2),
that at least one sensor (9) for determining an axial load at least of a rear axle of the vehicle is present and the sensor (9) is connected to the control device (2) in terms of signal engineering such that
an apparatus (13) for static determination of a vehicle mass value of the control device (2) can read in the sensor value of the sensor (9),
that the control device (2) is formed such that the static vehicle mass value previously determined in the apparatus for static determination of a vehicle mass value (13) can be read into the comparison apparatus (15) of the control device (2),
that the comparison apparatus (15) is formed to determine whether a determined static mass value lies within a predeterminable tolerance range around the read-in dynamic mass value,
that the control apparatus is formed such that, in the event that a static mass value lies in the tolerance range, the last dynamically determined vehicle mass value and otherwise the statically determined vehicle mass value can be transmitted as the relevant vehicle mass value to an output apparatus (16) of the control device (2),
and that the relevant mass value is provided by the control device (2) or the output apparatus (16) for reading out by at least one other control device (5, 6) until the apparatus for dynamic determination of the vehicle mass value (11) is able to provide a dynamic mass value with greater precision or serviceability.

11. Device according to Claim 10, **characterized in that** the vehicle (1) is a truck (1).

12. Device according to at least one of Claims 10 to 11, **characterized in that** the at least one sensor (9) for determining an axial load at least of a rear axle of the vehicle (1) is a pressure sensor (9) for determining an internal pressure of a pneumatic spring suspension element (8).

13. Device according to at least one of the preceding claims, **characterized in that** the control device (2) has a correction apparatus (14) which is able to compensate for an influence of a supporting cross-section which changes with the pressure of a pneumatic spring suspension element (8).

## Revendications

1. Procédé de détermination temporaire de la masse d'un véhicule (1) lors de l'initialisation, le véhicule (1) comprenant un appareil de commande (2) calculant une valeur de masse de véhicule actuelle sur la base de données de mouvement dynamiques du véhicule (1), l'appareil de commande mémorisant en outre dans une mémoire de données (12) lors de la désinitialisation de l'appareil de commande (2) la dernière valeur de masse de véhicule calculée dynamiquement et l'appareil de commande (2) lisant dans la mémoire de données (12), lors de l'initialisation de l'appareil de commande (2) ou juste après, la dernière valeur de masse de véhicule dynamique calculée, **caractérisé en ce que** l'appareil de commande (2) calcule en outre la charge d'essieu d'au moins un essieu arrière du véhicule (1) à l'aide d'un procédé statique, **en ce qu'**il lit au moins une valeur de mesure physique corrélée avec la charge d'essieu et calcule sur la base de celle-ci une valeur de masse de véhicule calculée statiquement, la compare avec la dernière valeur de masse de véhicule calculée dynamiquement et dans le cas dans lequel la valeur de masse de véhicule calculée statiquement s'écarte de plus d'une plage de tolérance prédéfinie par rapport à la dernière valeur calculée dynamiquement, reprend la valeur de masse de véhicule calculée statiquement comme valeur de masse de véhicule adéquate et utilise sinon la dernière valeur de masse de véhicule calculée dynamiquement comme valeur de masse de véhicule adéquate.

2. Procédé selon la revendication 1, **caractérisé en ce que** l'appareil de commande (2) détermine la valeur de masse de véhicule calculée statiquement sur la base des données d'au maximum deux capteurs (9) disposés pour l'essentiel sur une droite perpendiculaire horizontale commune par rapport à l'axe longitudinal du véhicule (1).

3. Procédé selon la revendication 1 ou 2, **caractérisé en ce que** l'appareil de commande (2) calcule la valeur de masse de véhicule calculée statiquement sur la base des données provenant d'au moins un capteur (9) disposé dans la région de l'essieu arrière placé le plus en avant, dans la région de la surface portante d'un semi-remorque ou dans la région la plus avancée d'un conteneur logeant la charge utile.

4. Procédé selon au moins l'une quelconque des revendications 1 à 3, **caractérisé en ce que** l'au moins un capteur (9) utilisé est un capteur sensible à la pression.

5. Procédé selon la revendication 4, **caractérisé en ce que** le capteur (9) utilisé est un capteur de pression piézoélectrique.

6. Procédé selon la revendication 4, **caractérisé en ce que** le capteur (9) utilisé est un capteur de pression calculant la pression régnant dans un élément de suspension pneumatique (8) du véhicule.

7. Procédé selon la revendication 6, **caractérisé en ce que** l'appareil de commande (2) calcule une valeur de pression corrigée sur la base d'une valeur de capteur calculée par le capteur de pression (9) en tenant compte d'une surface portante variant en fonction de la pression dans l'élément de suspension pneumatique.

8. Procédé selon au moins l'une quelconque des revendications précédentes, **caractérisé en ce que** l'appareil de commande (2) vérifie en outre au moins lors de l'initialisation si une remorque est couplée au véhicule ou découplée de celui-ci et si une valeur de masse de remorque propre est disponible, cette valeur est prise en compte lors du calcul de la valeur de masse de véhicule.

9. Procédé selon la revendication 8, **caractérisé en ce que** l'appareil de commande (2) augmente la valeur de masse de véhicule calculée d'une valeur de masse prédéfinie ou présélectionnable en fonction de la remorque dans la mesure où il détecte un couplage d'une remorque et où la remorque ne transmet aucune valeur de masse de remorque propre.

10. Dispositif de mise en oeuvre du procédé selon au moins l'une quelconque des revendications 1 à 9, un appareil de commande (2) doté d'un dispositif (11) de calcul d'une valeur de masse de véhicule dynamique sur la base de données de mouvement dynamiques lues du véhicule (1) étant présent dans un véhicule (1), **caractérisé en ce que** :
une mémoire de données (12) est présente pour mémoriser une dernière valeur de masse de véhicule calculée dynamiquement lors d'une désinitialisation de l'appareil de commande ;
l'appareil de commande (2) est réalisé de telle sorte que lors d'une initialisation de l'appareil de commande (2) ou juste après celle-ci, la dernière valeur de masse de véhicule dynamique calculée précédemment mémorisée peut être lue dans un dispositif de comparaison (15) de l'appareil de commande (2) à partir de la mémoire de données (12) ;
au moins un capteur (9) est présent pour calculer une charge d'essieu d'au moins un essieu arrière du véhicule et le capteur (9) est relié sur le plan de la technique des signaux à l'appareil de commande (2) de telle sorte que :
un dispositif (13) de calcul statique d'une valeur de masse de véhicule de l'appareil de commande (2) peut lire la valeur de capteur du capteur (9), que l'appareil de commande (2) est réalisé de telle sorte que la valeur de masse de véhicule statique calculée auparavant dans le dispositif de calcul statique d'une valeur de masse de véhicule (13) peut être lue dans le dispositif de comparaison (15) de l'appareil de commande (2) ;
le dispositif de comparaison (15) est conçu pour calculer si une valeur de masse statique calculée se situe à l'intérieur d'une plage de tolérance prédéfinissable par rapport à une valeur de masse dynamique lue ;
le dispositif de commande est réalisé de telle sorte que dans le cas dans lequel une valeur de masse statique se situe dans la plage de tolérance, la dernière valeur de masse de véhicule calculée dynamiquement peut être transmise au dispositif d'émission (16) de l'appareil de commande (2) et que sinon, elle est remplacée par la valeur de masse de véhicule calculée statiquement comme valeur de masse de véhicule adéquate ; et
la valeur de masse adéquate de l'appareil de commande (2) et/ou du dispositif d'émission (16) est mise à disposition pour lecture par au moins un autre appareil de commande (5, 6) jusqu'à ce que le dispositif de calcul dynamique de la valeur de masse de véhicule (11) soit en mesure de mettre à disposition une valeur de masse dynamique avec une précision ou une utilité supérieure.

11. Dispositif selon la revendication 10, **caractérisé en ce que** le véhicule (1) est un poids lourd (1).

12. Dispositif selon au moins l'une quelconque des revendications 10 et 11, **caractérisé en ce que** l'au moins un capteur (9) servant à calculer une charge d'essieu d'au moins un essieu arrière du véhicule (1) est un capteur de pression (9) servant à calculer une pression intérieure d'élément de suspension pneumatique (8).

13. Dispositif selon au moins l'une quelconque des revendications précédentes, **caractérisé en ce que** l'appareil de commande (2) comporte un dispositif de correction (14) en mesure de compenser l'influence d'une section transversale portante variant en fonction de la pression d'un élément de suspension pneumatique (8).
